# EUROPÄISCHE PATENTSCHRIFT

(11) **EP 4 305 370 B1**
(45) Veröffentlichungstag und Bekanntmachung des Hinweises auf die Patenterteilung: **05.03.2025**
(21) Anmeldenummer: 22701366.1
(22) Anmeldetag: 20.01.2022
(51) Int. Cl.: F27D 1/04, F27D 1/10, F27D 3/02

(54) **ISOLIERBETONSCHALE**
INSULATING CONCRETE SHELL
COQUE EN BÉTON ISOLANT

(30) Priorität: 09.03.2021 AT 501692021
(43) Veröffentlichungstag der Anmeldung: 17.01.2024
(73) Patentinhaber: ANDRITZ Metals Germany GmbH, 58675 Hemer (DE)
(72) Erfinder: TAETS VON AMERONGEN, Dankmar, 58511 Lüdenscheid (DE); KOFMANN, Boris, 47803 Krefeld (DE); SCHLICH, Gerhard, 45130 Essen (DE)
(74) Vertreter: Tschinder, Thomas
(86) Internationale Anmeldenummer: PCT/EP2022/051171
(87) Internationale Veröffentlichungsnummer: WO 2022/189051

(56) Entgegenhaltungen:
- EP-A1- 0 062 500
- EP-A1- 0 199 958
- WO-A1-2010/131213
- DE-A1- 3 231 736
- DE-U1- 8 407 841
- US-A- 4 134 721
- US-A- 4 386 630

## Beschreibung

Den Gegenstand dieser Erfindung bildet eine Isolierbetonschale aus feuerfestem Gießbeton oder aus feuerfestem Stampfbeton zur Isolierung von Stehern oder Tragrohren in einem Hubbalken- oder Stoßofen. Derartige Isolierbetonschalen sind so ausgeformt, dass sie das zu isolierende Rohr vollständig ummanteln können. Häufig werden hierfür zwei halbzylindrische Isolierbetonschalen um ein Rohr gelegt. Da die Rohre bzw. Steher aber auch einen ovalen oder eckigen Querschnitt aufweisen können, werden die Formen der Isolierbetonschalen entsprechend angepasst.

Es ist auch denkbar, dass drei oder mehr Isolierbetonschalen benötigt werden, um ein Rohr oder einen Steher vollständig zu ummanteln.

Die vorliegende Isolierbetonschale weist an der Innenseite am jeweiligen Ende jeweils einen Blechstreifen auf, über den die Isolierbetonschale am Steher oder am Tragrohr befestigt wird.

Den Gegenstand dieser Erfindung bildet auch ein Verfahren zur Herstellung einer Isolierbetonschale.

In Wärmebehandlungsöfen wie Hubbalkenöfen oder Stoßöfen werden häufig wasser- oder dampfgekühlte Tragrohre oder Steher verwendet, um die metallischen Werkstücke während der Wärmebehandlung abzustützen. Um den Wärmeverlust des Ofens infolge der Rohrkühlung zu reduzieren, sind die Rohre mit geeigneten Isolierhüllen aus keramischem oder feuerfestem Material versehen. Die Lebensdauer dieser Rohisolierung ist begrenzt, sodass die Öfen in regelmäßigen Zeitintervallen stillgelegt werden und die Isolierung ersetzt wird.

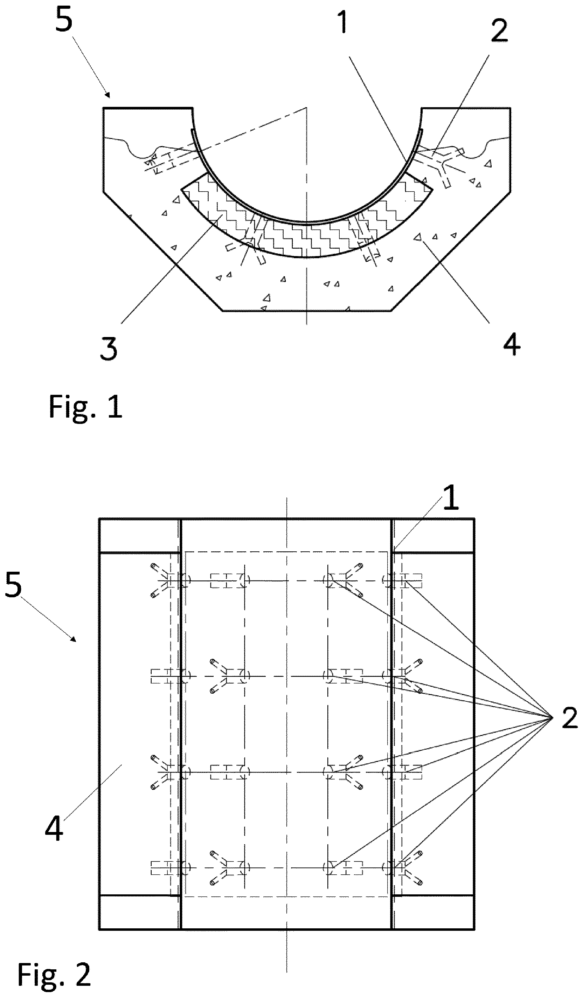

Herkömmliche Isolierbetonschalen haben an der Innenseite ein dem Rohrdurchmesser des Tragrohrsystems angepasstes gewalztes Blech 1 (siehe Figuren 1 und 2). An dem Blech 1 sind eine Reihe von Ankern (Schlitzstiften) 2 angeschweißt. Auf das gewalzte Blech 1 wird eine keramische Fasermatte 3 aufgelegt und die durch die Fasermatte 3 ragenden Schlitzstifte 2 werden aufgespreizt, sodass die Fasermatte 3 dadurch am Blech 1 gehalten wird.

Die keramische Fasermatte 3 dient zur Reduzierung der Wärmeleitfähigkeit der Isolierbetonschale 5.

Die Ummantelung der Isolierbetonschale 5 wird dann aus einem gegossenen oder gestampften Feuerfestbeton 4 hergestellt. Das Blech 1 und die Anker (2) tragen wesentlich zur Festigkeit der Isolierbetonschale 5 bei.

Eine Isolierbetonschale nach dem Stand der Technik ist auch in der WO 2010/131213 beschrieben.

Zur Montage der Isolierbetonschalen wird das gewalzte Blech 1 dann an den Tragrohren bzw. Stehern des Ofens angebracht, zum Beispiel verschweißt oder verschraubt.

Bei den herkömmlichen Isolierbetonschalen treten folgende Probleme auf:
- Durch die Vielzahl der mit dem Blech verschweißten Anker (Schlitzstifte) ergibt sich eine erhöhte Wärmeleitfähigkeit gegenüber einer Anwendung ohne solche Anker.
- Durch den Gießprozess wird die keramische Fasermatte mit dem Gießwasser kontaminiert (infiltriert) und zusammengepresst, sodass sich auch dadurch die Wärmeleitfähigkeit erhöht.

Die DE 8 407 841 U1 offenbart eine feuerfeste Ummantelung für langgestreckte Bauteile in Öfen aus Mineral- oder Keramikfasern. Diese Ummantelung umfasst auch zwei kreisbogenförmige Halterungen, die zwei schmale etwa halbkreisförmige, scharnierartig miteinander verbundene Haltebügel aufweisen.

Die DE2354883 offenbart eine halbzylindrische Isolierbetonschale aus einem keramischen Material. Im Gegensatz zur oben beschriebenen Isolierbetonschale sind hier nur noch zwei innenliegende Metallbänder vorgesehen, über die die beiden Isolierbetonschalen miteinander verriegelt werden können. An den Bändern sind V-förmige Armierungsglieder (Anker) aus korrosionsfestem Stahl angeschweißt. Die beiden Bänder und die Armierungsglieder sind mit dem Keramikmaterial vergossen. Durch die Verwendung von zwei schmalen Metallbändern anstatt eines großflächigen Bleches und durch die reduzierte Anzahl von Armierungsgliedern wird zwar die Wärmeleitfähigkeit der Isolierbetonschale geringgehalten, jedoch ist durch das Fehlen einer metallischen Stützstruktur die mechanische Stabilität dieser Isolierbetonschale geringer.

Der Erfindung liegt daher die Aufgabe zugrunde, eine Isolierbetonschale bereitzustellen, die einerseits eine möglichst geringe Wärmeleitfähigkeit und andererseits eine möglichst große Stabilität aufweisen soll.

Gelöst wird diese Aufgabe durch eine Isolierbetonschale gemäß Patentanspruch 1. Bei der erfindungsgemäßen Isolierbetonschale sind die beiden zu einem Halbkreis gebogenen Blechstreifen durch Drähte miteinander verbunden, wobei die beiden Drähte vollständig im Gieß- bzw. Stampfbeton eingebettet sind.

Durch die eingesetzten Blechstreifen wird die Wärmeleitfähigkeit der Isolierbetonschalen gegenüber Isolierbetonschalen mit durchgehendem Blechmantel erheblich reduziert. Durch die Verbindung der beiden Blechstreifen über die Drähte wird ebenfalls die Wärmeleitfähigkeit geringgehalten und außerdem wird dadurch eine gute Stabilität der Isolierbetonschale erreicht. Vorzugsweise sind die Blechstreifen über zwei Drähte, die eine langgezogene u-Form aufweisen können, miteinander verbunden.

Es ist sehr vorteilhaft, wenn die Drähte nur an ihren Enden mit den Blechstreifen verschweißt sind. Dadurch ergibt sich eine sehr kleine Kontaktfläche mit den Blechstreifen und somit eine geringe Wärmeleitfähigkeit.

Vorzugsweise sind entlang der Drähte Querdrähte befestigt, sodass die beiden Blechstreifen über gitterartige Drahtanker miteinander verbunden werden. Dies erhöht die Stabilität der Isolierbetonschale.

Erfindungsgemäß befindet sich an der Innenseite der Isolierbetonschale im Bereich zwischen den beiden Blechstreifen eine Ausnehmung, in die eine Fasermatte eingelegt ist. Durch die eingelegte Fasermatte kann die Isolierfähigkeit erhöht werden. Außerdem ermöglich dieser Aufbau ein Einlegen der Fasermatte erst nach dem Gießprozess/Stampfprozess und nach dem Aushärten, sodass die Fasermatte nicht mehr durch das Gießwasser beschädigt werden kann.

Die Erfindung betrifft auch ein Verfahren zur Herstellung einer Isolierbetonschale, umfassend die folgenden Arbeitsschritte:
- zwei Blechstreifen werden entsprechend der Form eines Stehers oder eines Tragrohres gebogen, sodass sie bei der späteren Montage an den Steher oder an das Tragrohr angelegt werden können;
- die beiden gebogenen Blechstreifen werden durch mindestens zwei Drähte miteinander verbunden;
- die miteinander verbundenen Blechstreifen werden in eine Gießform bzw. Stampfform eingelegt, mit einer Aussparung, die beispielweise halbzylinderförmig sein kann, an der Innenseite zwischen den beiden Blechstreifen;
- die Gießform bzw. Stampfform wird mit Feuerfestbeton gefüllt;
- nach dem Aushärten wird das hergestellte Bauteil aus der Form entnommen;
- eine keramische Fasermatte wird in die Aussparung an der Innenseite eingelegt.

Die eingelegte keramische Fasermatte kann hierbei nicht mehr durch den wasserhaltigen Feuerfestbeton verformt werden, sodass sich die Isoliereigenschaften zusätzlich verbessern.

Im Folgenden wird der Stand der Technik und ein Ausführungsbeispiel der Erfindung anhand von Zeichnungen beschrieben. Es zeigen:
Fig. 1 einen schematischen Querschnitt durch eine Isolierbetonschale gemäß Stand der Technik;
Fig. 2 einen Schnitt in Längsrichtung durch die Isolierbetonschale aus Figur 1;
Fig. 3 einen schematischen Querschnitt durch ein Ausführungsbeispiel einer erfindungsgemäßen Isolierbetonschale;
Fig. 4 einen Schnitt in Längsrichtung durch die Isolierbetonschale aus Figur 3;
Fig. 5 eine perspektivische Ansicht der erfindungsgemäßen Isolierbetonschale;

Gleiche Bezugszeichen in den einzelnen Figuren bezeichnen jeweils gleiche Elemente.

Die in Figur 1 und 2 gezeigte Isolierbetonschale 5 zeigt eine Ausführung nach dem Stand der Technik, wie er bereits in der Einleitung oben erläutert wurde.

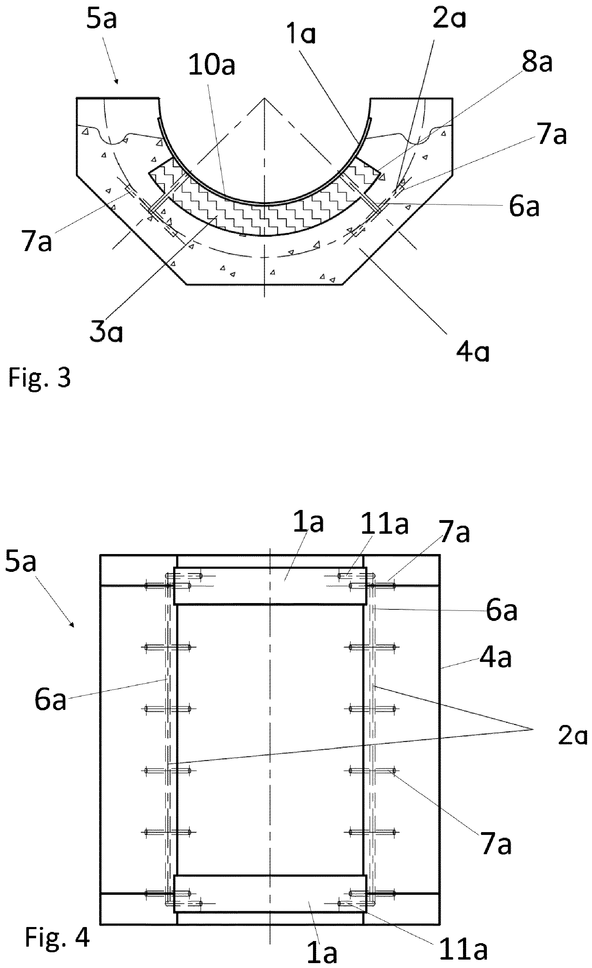

In Figur 3 ist nun eine erfindungsgemäße Isolierbetonschale 5 im Querschnitt dargestellt. Figur 4 zeigt eine seitliche Schnittansicht der Isolierbetonschale 5 aus Figur 1.

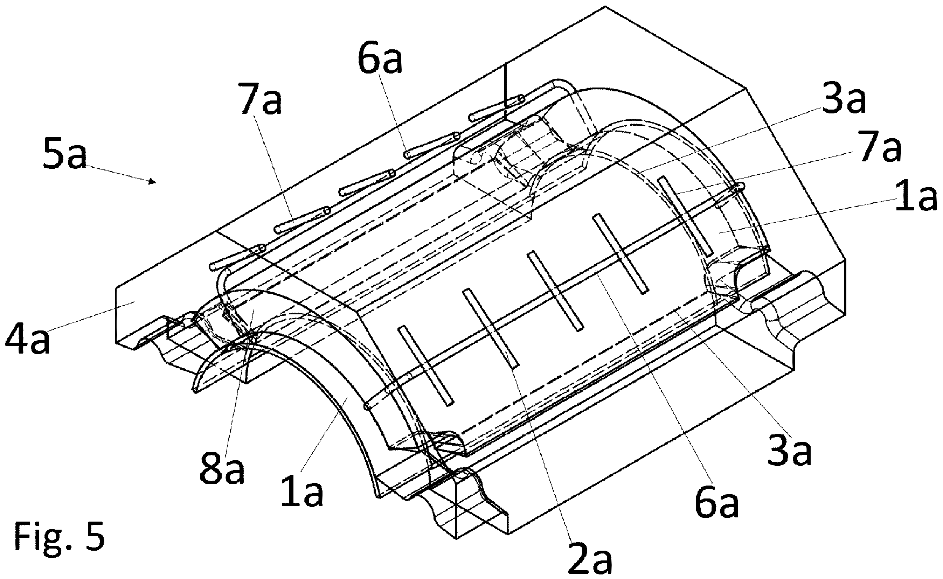

An der Innenseite 10a erkennt man die beiden zu einem Halbkreis gebogenen Blechstreifen 1a. An den Blechstreifen 1a sind zwei Drähte 6a angeschweißt. Die beiden Drähte 6a sind dabei u-förmig gebogen und an den Drahtenden 11a mit den Blechstreifen 6a verschweißt. Entlang der Drähte 6a sind Querdrähte 7a befestigt, sie erstrecken sich im vorliegenden Ausführungsbeispiel im Wesentlichen in Umfangsrichtung der Isolierbetonschale 5a. Die Drähte 6a und die Querdrähte 7a bilden gitterförmige Drahtanker 2a. Die Drähte 6a und die Querdrähte 7a sind in Gieß- bzw. Stampfbeton 4a eingebettet. An der Innenseite 10a im Bereich zwischen den Blechstreifen 6a ist eine Ausnehmung 8a im Gieß- bzw. Stampfbeton 4a vorgesehen. In diese Ausnehmung 8a ist eine keramische Fasermatte 3a eingelegt. Die U-Form der Drähte 6a ist in Figur 5 gut erkennbar.

### Bezugszeichen

- 1: Blech
- 2: Anker (Schlitzstifte)
- 3: Fasermatte
- 4: Gieß/Stampfbeton
- 5: Isolierbetonschale
- 1a: Blechstreifen
- 2a: Drahtanker
- 3a: Fasermatte
- 4a: Gieß/Stampfbeton
- 5a: Isolierbetonschale
- 6a: Drähte
- 7a: Querdrähte
- 8a: Ausnehmung
- 10a: Innenseite
- 11a: Drahtende

## Patentansprüche

1. Isolierbetonschale (5a) aus feuerfestem Gießbeton oder aus feuerfestem Stampfbeton (4a) zur Isolierung von Stehern oder Tragrohren in einem Hubbalken- oder Stoßofen, wobei die Isolierbetonschale (5a) schalenförmig ausgebildet ist und an der Innenseite (10a) am jeweiligen Ende der Isolierbetonschale (5a) jeweils ein zu einem Halbkreis gebogener Blechstreifen (1a) angeordnet ist zur Befestigung der Isolierbetonschale (5a) an einem Steher oder an einem Tragrohr, **dadurch gekennzeichnet, dass** die beiden Blechstreifen (1a) durch Drähte (6a) miteinander verbunden sind und dass die beiden Drähte (6a) vollständig im Gieß- bzw. Stampfbeton (4a) eingebettet sind, wobei sich an der Innenseite (10a) der Isolierbetonschale (5a) im Bereich zwischen den beiden Blechstreifen (1a) eine Ausnehmung (8a) befindet, in die eine Fasermatte (3a) eingelegt ist.

2. Isolierbetonschale (5a) nach Anspruch 1, **dadurch gekennzeichnet, dass** die Drähte (6a) an ihren Enden (11a) mit den Blechstreifen (1a) verschweißt sind.

3. Isolierbetonschale (5a) nach Anspruch 1 oder 2, **dadurch gekennzeichnet, dass** die beiden Blechstreifen (6a) durch zwei Drähte (6a) miteinander verbunden sind.

4. Isolierbetonschale (5a) nach einem der Ansprüche 1 bis 3, **dadurch gekennzeichnet, dass** die Drähte (6a) u-förmig gebogen sind.

5. Isolierbetonschale (5a) nach einem der Ansprüche 1 bis 4, **dadurch gekennzeichnet, dass** entlang der Drähte (6a) Querdrähte (7a) befestigt sind, sodass die beiden Blechstreifen (1a) über gitterartige Drahtanker (2a) miteinander verbunden sind.

6. Isolierbetonschale (5a) nach Anspruch 5, **dadurch gekennzeichnet, dass** die Querdrähte (6a) auch vollständig im Gieß- bzw. Stampfbeton (4a) eingebettet sind.

7. Verfahren zur Herstellung einer schalenförmigen Isolierbetonschale (5a), umfassend die folgenden Arbeitsschritte:
- zwei Blechstreifen (1a) werden entsprechend der Form eines Stehers oder eines Tragrohres zu einem Halbkreis gebogen;
- die beiden gebogenen Blechstreifen (1a) werden durch mindestens zwei Drähte (6a) miteinander verbunden;
- die miteinander verbundenen Blechstreifen (1a) werden in eine Gießform bzw. Stampfform eingelegt, wobei diese Form das Herstellen eines im wesentlichen schalenförmigen Bauteils ermöglicht mit einer Ausnehmung (8a) an der Innenseite (10a) zwischen den beiden Blechstreifen (1a);
- die Gießform bzw. Stampfform wird mit Feuerfestbeton (4a) gefüllt;
- nach dem Aushärten wird das hergestellte Bauteil aus der Form entnommen;
- eine keramische Fasermatte (3a) wird in die Ausnehmung (8a) an der Innenseite (10a) eingelegt.

## Claims

1. Insulating concrete shell (5a) made of refractory cast concrete or of refractory tamped concrete (4a) for insulating uprights or supporting tubes in a walking beam furnace or pusher-type furnace, wherein the insulating concrete shell (5a) is shell-shaped and a respective sheet metal strip (1a), bent into a semicircle, is arranged on the inner side (10a) at the respective end of the insulating concrete shell (5a) for fastening the insulating concrete shell (5a) to an upright or to a supporting tube, **characterised in that** the two sheet metal strips (1a) are connected to one another by wires (6a) and **in that** the two wires (6a) are completely embedded in the cast or tamped concrete (4a), wherein on the inner side (10a) of the insulating concrete shell (5a) in the area between the two sheet metal strips (1a) there is a recess (8a) into which a fibre mat (3a) is inserted.

2. Insulating concrete shell (5a) according to claim 1, **characterised in that** the wires (6a) are welded at their ends (11a) to the sheet metal strips (1a).

3. Insulating concrete shell (5a) according to claim 1 or 2, **characterised in that** the two sheet metal strips (6a) are connected to each other by two wires (6a).

4. Insulating concrete shell (5a) according to one of claims 1 to 3, **characterised in that** the wires (6a) are bent in U-shape.

5. Insulating concrete shell (5a) according to one of claims 1 to 4, **characterised in that** cross wires (7a) are fixed along the wires (6a) so that the two sheet metal strips (1a) are connected to each other via grid-like wire anchors (2a).

6. Insulating concrete shell (5a) according to claim 5, **characterised in that** the cross wires (6a) are completely embedded in the cast or tamped concrete (4a).

7. Method of producing a shell-shaped insulating concrete shell (5a), comprising the following steps:
- two sheet metal strips (1a) are semicircle bent according to the shape of an upright or a supporting tube;
- the two bent sheet metal strips (1a) are connected by at least two wires (6a);
- the interconnected sheet metal strips (1a) are placed in a casting or tamping mould, this mould enabling the production of a substantially shell-shaped component with a recess (8a) on the inner side (10a) between the two sheet metal strips (1a);
- the casting or tamping mould is (4a) filled with refractory concrete;
- after curing, the manufactured component is removed from the mould;
- a ceramic fibre mat (3a) is inserted into the recess (8a) at the inner side (10a).

## Revendications

1. Coque en béton isolant (5a) constitué de béton coulé réfractaire ou de béton damé réfractaire (4a) destinée à isoler des montants ou des tubes de support dans un four à longerons mobiles ou à poussoir, la coque en béton isolant (5a) se présente sous la forme de coque, et sur la face intérieure (10a) à chaque extrémité de la coque en béton isolante (5a) est disposée respectivement une bande de tôle (1a), pliée en demi-cercle, servant à fixer la coque en béton isolant (5a) à un montant ou à un tube de support, **caractérisée en ce que** les deux bandes de tôle (1a) sont reliées l'une à l'autre par des fils (6a) et **en ce que** les deux fils (6a) sont complètement noyés dans le béton coulé ou dans le béton damé (4a), dans laquelle sur la face intérieure (10a) de la coque en béton isolant (5a) dans la zone entre les deux bandes de tôle (1a) est ménagé un évidement (8a) dans lequel est inséré une natte fibreuse (3a).

2. Coque en béton isolant (5a) selon la revendication 1, **caractérisée en ce que** les fils (6a) sont soudés par leurs extrémités (11a) aux bandes de tôle (1a).

3. Coque en béton isolant (5a) selon la revendication 1 ou 2, **caractérisée en ce que** les deux bandes de tôle (6a) sont reliées l'une à l'autre par deux fils (6a).

4. Coque en béton isolant (5a) selon l'une quelconque des revendications 1 à 3, **caractérisée en ce que** les fils (6a) sont pliés en forme de U.

5. Coque en béton isolant (5a) selon l'une quelconque des revendications 1 à 4, **caractérisée en ce que** des fils transversaux (7a) sont fixés le long des fils (6a) de manière à ce que les deux bandes de tôle (1a) soient reliées l'une à l'autre par l'intermédiaire de tiges d'ancrage (2a) en forme de treillis.

6. Coque en béton isolant (5a) selon la revendication 5, **caractérisée en ce que les** fils transversaux (6a) sont également complètement noyés dans le béton coulé ou damé (4a).

7. Procédé de fabrication d'une coque en béton isolant en forme de coque (5a), comprenant les étapes suivantes :
- deux bandes de tôle (1a) sont pliées en demi-cercle conformément à la forme d'un montant ou d'un tube de support ;
- les deux bandes de tôle (1a) sont reliées par au moins deux fils (6a) ;
- les deux bandes de tôle (1a) reliées entre elles sont placées dans un moule de coulage ou pour béton damé, ce moule permettant la fabrication d'un élément sensiblement en forme de coque doté d'un évidement (8a) sur la face intérieure (10a) entre les deux bandes de tôle (1a) ;
- le moule de coulage ou pour béton damé est rempli de béton réfractaire (4a) ;
- une fois durci, l'élément fabriqué est retiré du moule ;
- une natte en fibre céramique (3a) est insérée dans l'évidement (8a) sur la face intérieure (10a).
